# EUROPÄISCHE PATENTSCHRIFT

(11) **EP 2 712 154 B1**
(45) Veröffentlichungstag und Bekanntmachung des Hinweises auf die Patenterteilung: **24.04.2019**
(21) Anmeldenummer: 12185759.3
(22) Anmeldetag: 24.09.2012
(51) Int. Cl.: H04M 1/725, G06Q 10/02, H04W 4/21

(54) **Verfahren zur Steuerung mindestens eines mobilen Endgeräts**
Method for controlling at least one mobile terminal device
Procédé de commande d'au moins un terminal mobile

(43) Veröffentlichungstag der Anmeldung: 26.03.2014
(73) Patentinhaber: Hayden, Oliver, 85368 Moosburg an der Isar (DE); Jell, Wolf-Dietmar, 4209 Engerwitzdorf (AT)
(72) Erfinder: Hayden, Oliver, 85368 Moosburg an der Isar (DE)
(74) Vertreter: Jell, Friedrich

(56) Entgegenhaltungen:
- US-A1- 2012 096 014
- "Drag & Drop Ranking Question Type", , 15. August 2012 (2012-08-15), Seiten 1-2, XP055056290, Gefunden im Internet: URL:http://web.archive.org/web/20120815214 727/http://www.surveygizmo.com/survey-soft ware-features/drag-drop-ranking-question-t ype [gefunden am 2013-03-13]

## Beschreibung

Die Erfindung betrifft ein Verfahren zur Steuerung mindestens eines mobilen Endgeräts mit einer berührungsempfindlichen Anzeigeeinrichtung, aufweisend: Darstellung von mindestens zwei graphischen Elementen, insbesondere Bildern oder Icons, auf der Anzeigeeinrichtung und von wenigstens zwei auf der Anzeigeeinrichtung abgegrenzten Anzeigebereichen und Detektion mindestens einer Berührung an der berührungsempfindlichen Anzeigeeinrichtung, Detektion mindestens einer Berührung an der berührungsempfindlichen Anzeigeeinrichtung, Ziehen und Fallenlassen von mindestens zwei graphischen Elementen auf abgegrenzte Anzeigebereiche entsprechend der detektierten Berührung an der Anzeigeeinrichtung, Übertragung von Daten an mindestens einen Anwendungsserver, wobei der Anwendungsserver daraus wenigstens mitprotokolliert, auf welche Anzeigebereiche graphische Elemente fallengelassen wurden.

Aus dem Stand der Technik ist ein EDV-gestütztes Verfahren zur individuellen Bewertung von Bilden bekannt (vgl. http://www.hotornot.de/). Vergleichbare Anwendungsprogramme existieren auch für mobile Endgeräte, beispielsweise für "Smartphones". Auf deren berührungsempfindlichen Anzeigeeinrichtung, insbesondere Touchscreen, wird ein Bild als graphisches Element angezeigt, das über eine Bewertungsskala individuell bewertet werden kann. Zu diesem Zweck weist die Bewertungsskala mehrere abgegrenzte Anzeigebereiche auf, die je eine Bewertungshöhe in der Bewertungsskala darstellen. Die Bewertung des Bilds wird durch Berührung eines der abgegrenzten Anzeigebereiche abgegeben. Zusätzlich werden weitere graphische Elemente von der Anzeigeeinrichtung angezeigt, die jedoch keiner Bewertung unterworfen werden können. Diese individuelle Bewertung des Bilds wird in weiterer Folge auf einem Anwendungsserver gespeichert, wobei Endgerät und Anwendungsserver diesbezüglich synchronisiert werden. Der Anwendungsserver zählt auch die abgegebenen Bewertungen mit und erstellt für jedes bewertete Bild eine Gesamtbewertung. Anderen Benutzern dieses Anwendungsprogramms wird diese Gesamtbewertung angezeigt.

Ein Verfahren des Oberbegriffs ist zudem aus der US 2012/0096014A1 bekannt.

Die Erfindung hat sich nun ausgehend vom eingangs geschilderten Stand der Technik die Aufgabe gestellt, eine Verfahren zur Steuerung eines mobilen Endgeräts derart zu verbessern, dass Zuordnungen, etwa Bewertungen, von mehreren graphischen Elementen über mobile Endgeräten effizienter, benutzerfreundlicher und sicherer erfolgen können, wobei vor allem auch der Informationsgehalt derartiger Zuordnungen erhöht werden soll.

Die Erfindung löst die gestellte Aufgabe durch die Merkmale des Anspruchs 1.

Werden graphische Elemente auf abgegrenzte Anzeigebereiche entsprechend der detektierten Berührung an der Anzeigeeinrichtung gezogen und fallengelassen, so kann einem Benutzer zunächst nach dem "Drag und Drop" Verfahren eine bekannte einfache Möglichkeit zur Verschiebung graphischer Elemente auf einer Anzeigeeinrichtung zur Verfügung gestellt werden.
Dadurch, dass jedoch mindestens zwei graphische Elemente dargestellt und vor allem auch mindestens zwei gezogen und fallengelassen werden, können sich zudem wesentliche Vorteile in Hinblick auf die Verfahrenssicherheit ergeben. Der Benutzer eines Endgeräts muss das Ziehen und Fallenlassen dann nämlich erheblich gezielter und bewusster durchführen, als dies beim Stand der Technik durch Druck von ein oder mehrere Buttons der Fall ist. Eine entscheidende Verbesserung des erfindungsgemäßen Verfahrens ist vor allem auch die gemeinsame, also gleichzeitige, Darstellung von mehreren graphischen Elemente - vorzugsweise frei wählbar - zugeordnet werden können. Erfindungsgemäß wird also auf vergleichsweise kleinen Anzeigeeinrichtungen, wie dies gerade bei mobilen Endgeräten der Fall sein kann, ein direkter und somit verbesserter Vergleich graphischer Elemente und/oder abgegrenzter Anzeigebereiche ermöglicht. So kann eine erheblich genauere, sichere und differenziertere Zuordnung von graphischen Elementen - etwa eine in der Bewertungsskala abgestufte positive oder negative Zuordnung - durch Fallenlassen auf einen entsprechenden abgegrenzten Anzeigebereich erfolgen, insbesondere natürlich, wenn bereits erfolgte Zuordnungen dargestellt bleiben und auch noch nachträglich verändert werden können. So kann sich für einen Benutzer eine verbesserte Nachvollziehbarkeit seiner Zuordnung durch entsprechendes Fallenlassen auf einen abgegrenzten Anzeigenbereich ergeben. Zusätzliche Vorteile können erreicht werden, da mithilfe einer entsprechenden Anordnung bzw. Verteilung der abgegrenzten Anzeigebereiche auf der Anzeigeeinrichtung sichergestellt werden kann, dass selbst vergleichsweise kleine Anzeigeeinrichtung für einen Benutzer eine übersichtliche graphische Benutzeroberfläche darstellen können. Durch Vorstehendes kann die Verfahrenssicherheit also entscheidend verbessert werden - und zwar selbst bei vergleichsweise kleinen Anzeigeeinrichtungen, wie dies bei mobilen Endgeräten der Fall ist.

Dem Genannten kommt in Hinblick auf ein sicheres, zuverlässiges, reproduzierbares Verfahren entscheidende Bedeutung zu, insbesondere auch bezüglich einer in weiterer Folge stattfindenden Übertragung von Daten an mindestens einen Anwendungsserver, wobei der Anwendungsserver daraus wenigstens mitprotokolliert, auf welche Anzeigebereiche graphische Elemente fallengelassen wurden. Es hat sich nämlich herausgestellt, dass gerade bei mobilen Endgeräten, die lediglich eine in ihrer Größe eingeschränkte Anzeigeeinrichtung aufweisen und auf denen oft zahlreiche Applikationen etc. mit diversen bekannten Verfahren installiert sind, eine Zuordnung von graphischen Elementen durch einen Benutzer üblicherweise äußerst ungenau erfolgt. Bekannte Verfahren haben primär das Ziel, dem Benutzer eine schnelle Eingabe zu ermöglichen, was im Falle einer Zuordnung eines alleine dargestellten graphischen Elements auf einer Anzeigeeinrichtung unter Umständen auch gelingen kann. Dabei wird aber lediglich geringe Rücksicht auf Qualität und Aussagekraft der Zuordnung genommen. Dementsprechend ist auch die Protokollierung und/oder Auswertung derartiger Zuordnungen durch einen Anwendungsserver nur eingeschränkt möglich und sinnvoll, weshalb diese dann dem Benutzer, wenn überhaupt, nur in entsprechend geringem Ausmaß zur Kenntnis gebracht wird/werden - etwa durch Anzeige einer Anzahl an positiven und/oder negativen Bewertungen zu einem einzeln dargestellten Bild. Das erfindungsgemäße Verfahren kann im Gegensatz dazu - beispielsweise aufgrund der gemeinsamen Darstellung von mehreren graphischen Elementen und mehreren abgegrenzten Anzeigebereichen - nicht nur schnell und sicher durchgeführt werden, wie bereits ausgeführt, erlaubt es auch die Erfassung eines wesentlich höheren und brauchbareren Informationsgehalts. Diese Vorteile können auch bei der Datenübertragung an mindestens einen Anwendungsserver genutzt werden, wobei der Anwendungsserver wenigstens mitprotokolliert, auf welche abgegrenzten Anzeigebereiche graphische Elemente fallengelassen wurden. So kann sich mithilfe eines Anwendungsservers eine hohe Verfahrenssicherheit ergeben, da eine vom mobilen Endgerät unabhängige Datenverwaltung zur Verfügung gestellt wird.

In weiterer Folge kann nach Protokollierung, eventueller weiterer Datenverarbeitung und Synchronisation des Endgeräts mit von den Protokollen des Anwendungsserver abhängigen Daten beispielsweise an einem Endgerät nicht nur dargestellt werden, wie oft ein graphisches Element einem bestimmten abgegrenzten Anzeigenbereich zugeordnet wurde, vielmehr kann dies - gegenüber dem Stand der Technik entscheidend verbessert - im Vergleich zu mehreren anderen graphischen Elementen erfolgen. So kann also zusätzlich zu einer bekannten Datenverarbeitung an einem Anwendungsserver und Darstellung - etwa der absoluten Anzahl von diesen Zuordnungen - am Endgerät beispielsweise auch die Auswertung und/oder Darstellung der relativen Verhältnisse von Zuordnungen graphischer Elemente zu abgegrenzten Anzeigebereichen zueinander erfolgen. Letzteres könnte am Beispiel von Bewertungsverfahren etwa durch ein Punktesystem erfolgen, wobei jeder abgegrenzte Anzeigebereich einen Wert einer Bewertungsskala darstellt. In diesem Zusammenhang ist auch ein wesentlicher Vorteil des Verfahrens, dass für die Darstellung auf einem Endgerät nach Synchronisation mit einem Anwendungsserver die in den vorangegangenen Teilen des Verfahrens am Endgerät dargestellten abgegrenzten Anzeigebereiche durch die gemeinsame Darstellung auch genutzt werden können - bei Bedarf sogar in identischer Form -, um vom Server übertragene Daten darzustellen, was unter anderem Übersichtlichkeit und Benutzungsfreundlichkeit des Verfahrens verbessert. Dieses Verfahren kann zudem vorteilhaft sowohl als abgeschlossene, eigenständige Applikation, als auch integriert - etwa in Websites mit anderen Darstellungen integriert werden.

Der Vollständigkeit halber wird erwähnt, dass unter einem graphischen Element auf der Anzeigeeinrichtung dargestellte Visualisierungselemente verstanden werden können, denen beispielsweise Bilder, Grafiken, Texte, Multimediadateien Hyperlinks oder URLs hinterlegt sein können. Des Weiteren wird im Allgemeinen festgehalten, dass das Verfahren nicht nur für ein einzelnes Endgerät ausgelegt sein muss, sondern vielmehr für mehrere, eventuell auch bestimmte und/oder zu definierende Gruppen von Benutzern bzw. deren Endgeräte durchgeführt werden kann, wobei deren an einen Anwendungsserver übertragene Daten protokolliert etc. werden.

Weist wenigstens ein abgegrenzter Anzeigebereich eine Darstellung eines der ziehbaren graphischen Elemente auf, kann für einen Benutzer eines Endgeräts auf einfache Weise die Nachvollziehbarkeit eines Fallenlassens und somit einer Zuordnung eines graphischen Elements erfolgen. Somit können unter anderem Sicherheit und Benutzerfreundlichkeit des Verfahrens verbessert werden. Vorteilhaft ist in diesem Zusammenhang auch die Möglichkeit, dass nach Synchronisation eines Endgeräts mit einem Anwendungsserver die im Verfahren davor auf der Anzeigeeinrichtung dargestellten abgegrenzten Anzeigebereiche genutzt werden können, um auf dem Endgeräts Daten, Auswertungen, Ergebnisse etc. darzustellen. Durch die dadurch erreichte Kontinuität in Aufbau Darstellung etc. auf der Anzeigeeinrichtung kann das Verfahren eine erhebliche Erleichterung hinsichtlich Übersichtlichkeit, Bedienung, Auffassung von Informationen etc. für die Benutzter bieten.

Werden die Daten zu allen auf die abgegrenzten Anzeigebereiche der Anzeigevorrichtung fallengelassenen, graphischen Elemente übertragen, können dem Anwendungsserver Zuordnungen übermittelt werden, ebenso kann es jedoch auch im Sinne der Erfindung sein, Informationen, dass Elemente eventuell keinem Anzeigenbereich zugeordnet wurden, zu nutzen und auszuwerten.

Werden die ziehbaren graphischen Elemente entsprechend ihrem Fallenlassen auf den abgegrenzten Anzeigebereichen einer Bewertung unterworfen, ergibt sich eine vorteilhafte Möglichkeit für ein sicheres, schnelles Bewertungsverfahren mit besonders hoher Aussagekraft. Wie bereits ausgeführt, können hierbei die erfindungsgemäßen Vorteile, etwa Übersichtlichkeit und Nachvollziehbarkeit durch die gemeinsame Anzeige von mindestens einem ziehbaren graphischen Element sowie mindestens einem abgegrenzten Anzeigenbereich und die zusätzliche Erfordernis des Ziehens und Fallenlassens von mindestens zwei graphischen Elementen auf diese Anzeigenbereiche eine erhöhte Aufmerksamkeit des Benutzer erfordern, ohne aber dessen Zeitaufwand zur Durchführung des Verfahrens zu erhöhen. Durch die gemeinsame Anzeige ist es nämlich nicht erforderlich, stets neue Elemente auf die Anzeigeeinrichtung zu laden, der Benutzer kann durchgeführte Zuordnungen schnell nachvollziehen und vergleichen etc. Nicht zuletzt können die Daten auch mehreren unterschiedlichen absoluten und/oder relativen Bewertungsverfahren unterworfen werden, da die übertragenen Daten - wie beschrieben - im Vergleich zum Stand der Technik einen höheren Informationsgehalt aufweisen können.

Die Übersichtlichkeit und Benutzerfreundlichkeit des Verfahrens kann noch weiter verbessert werden, wenn nach der Synchronisation die Darstellung auf der Anzeigeeinrichtung des Endgeräts verändert wird. So ist es also möglich, dem Benutzer unmittelbar eine Information durch veränderte Darstellungen der abgegrenzten Anzeigenbereiche zu übermitteln, womit durch Beschleunigung des erfindungsgemäßen Verfahrens eine hohe Benutzerfreundlichkeit gewährleistet wird. Insbesondere ist es in diesem Zusammenhang möglich, eventuell für eine Darstellung einer Information an den Benutzer nicht mehr benötigte Darstellungen, insbesondere graphisehe Elemente, zur Verbesserung der Übersichtlichkeit von der Anzeigeeinrichtung zu entfernen. Im Gegenzug ist es natürlich möglich, danach verbliebene, gewünschte Darstellungen vergrößert anzuzeigen, was insbesondere bei mobilen Endgeräten von Vorteil sein kann.

Werden die gemeinsamen Darstellungen graphischer Elemente in den abgegrenzten Anzeigebereichen synchronisiert, können dem Benutzer eines Endgeräts auf einfache, effektive und sichere Weise Informationen vermittelt werden. Vorteilhaft ist es erfindungsgemäß also möglich, die vom Benutzter bereits im Zuge seiner Zuordnungen durch Fallenlassen genutzten abgegrenzten Anzeigenbereiche heranzuziehen, wodurch diesem sicher, schnell und ohne hohe Aufmerksamkeitserfordernis Informationen zugänglich gemacht werden können. Im Gegensatz zum Stand der Technik können diese Informationen an einen Benutzer durch die gemeinsame Darstellung graphischer Elemente auf der Anzeigevorrichtung wiederum einen hohen Informationsgehalt aufweisen. Am Beispiel von Bewertungen kann ein graphisches Element nämlich nicht nur mit einer bestimmten Anzahl diverser positiver und/oder negativer Bewertungen dargestellt werden, sondern erfindungsgemäß für mehrere graphische Elemente bzw. wie beschreiben mit mehreren unterschiedlichen Bewertungsverfahren erfolgen. Durch Synchronisation werden die abgegrenzten Anzeigebereichen also gezielt genutzt, um einem Benutzer durch eine Veränderung der Reihung der in diesen dargestellten graphischen Elemente oder auch durch eine Änderung der Positionierung der abgegrenzten Anzeigenbereiche auf der Anzeigeeinrichtung Informationen zu vermitteln. Vorteilhaft kann das Verfahren zudem sowohl als abgeschlossene, eigenständige Applikation, als auch integriert - etwa in Websites gemeinsam mit anderen Darstellungen die nicht unbedingt mit dem erfindungsgemäßen Verfahren zusammenhängen - integriert werden.

Vorstehendes gilt vor allem auch, wenn nach Synchronisation graphische Elemente ausschließlich in den abgegrenzten Anzeigebereichen dargestellt werden - etwa aufgrund von Platzgründen auf einer Anzeigeeinrichtung und der Übersichtlichkeit halber. Die Sicherheit des Verfahrens wird somit weiter erhöht.

Um einem Benutzer ein schnelles und zeitsparendes Verfahren zur Verfügung zu stellen, kann bei Synchronisation mit dem Anwendungsserver ein optisches, akustisches und/oder haptisches Feedback am Endgerät ausgegeben werden. Zudem lässt sich damit die Verfahrenssicherheit erhöhen, da ein Benutzer durch Ausbleiben eines Feedbacks auf eine fehlerhafte, unvollständige "Drag und Drop"-Eingabe oder auch auf einen anderen Grund einer nicht erfolgten Datenübertragung an einen Anwendungsserver hingewiesen werden kann. Ebenso kann sich dieser Vorteil auszeichnen, wenn das erfindungsgemäße Verfahren von mehreren Benutzern über deren Endgeräte durchgeführt wird, um auch diese von einer Datenübertragung eines Benutzers bzw. einer Synchronisation zu informieren.

Als besonders vorteilhaft bezüglich der Übersichtlichkeit auf der Anzeigeeinrichtung mobiler Endgeräte und ausreichender Vielfalt an Wahlmöglichkeiten eines Fallenlassens von graphischen Elementen auf abgegrenzten Anzeigebereichen ergeben sich, wenn mindestens drei, vorzugsweise vier, auf der Anzeigeeinrichtung abgegrenzte Anzeigebereiche dargestellt werden.

Vorstehend Erwähntes kann für Benutzer in einfach verständlicher und schnell wahrnehmbarer Weise dargestellt werden, wenn drei abgegrenzte Anzeigebereiche auf der Anzeigeeinrichtung zueinander stufenförmig versetzt angeordnet sind, insbesondere den Stufen eines dreistufigen Podests folgend. Letzteres kann sich insbesondere bewähren, wenn mithilfe des Verfahrens eine Bewertung vorgenommen werden soll. Ein sicheres Verfahren vor allem aufgrund der Übersichtlichkeit und der dadurch erreichten selbsterklärenden Zurodnungsmöglichkeiten ist somit geschaffen.

Dementsprechend kann sich eine Darstellung von vier ziehbaren graphischen Elementen auf der Anzeigeeinrichtung auszeichnen, weil damit unter anderem auch die Übersichtlichkeit an der Anzeigeeinrichtung erhalten bleiben kann. Dies gilt insbesondere dann, wenn das Steuerungsverfahren bei einem Mobiltelefon als mobilem Endgerät verwendet wird.

Das erfindungsgemäße Verfahren kann seine Vorteile insbesondere dann aufzeigen, wenn nach der Synchronisation eines Endgeräts mit dem Anwendungsserver dieser mindestens ein anderes mobiles Endgerät synchronisiert. So kann eine Vielzahl an mobilen Endgeräten bzw. unterschiedlichen Benutzern von Endgeräten nicht nur an der erfindungsgemäßen Steuerung teilnehmen, sondern unmittelbar über Änderungen in der Protokollierung, Datenverarbeitung etc. des Anwendungsservers informiert werden - unter anderem auch über ein optisches, akustisches und/oder haptisches Feedback am Endgerät. Vorstellbar ist dabei insbesondere auch, dass Datenübertragungen eines Endgeräts - etwa Bewertungen - von anderen Endgeräten über den Synchronisationsserver abgerufen werden können oder Datenübertragungen eines Benutzers auf andere Teilnehmer des Verfahrens übertragen werden, wobei dies Kenntnisnahme des Ergebnisses dieser Datenübertragung eventuell erst an deren Endgerät zu bestätigen ist und danach eine Synchronisation mit dem Anwendungsserver hinsichtlich der von diesem protokollierten, verarbeiteten Daten etc. erfolgt.

Für das erfindungsgemäße Verfahren eignet sich aus vorstehenden Gründen insbesondere auch ein dafür geeignetes Mobiltelefon mit einer berührungsempfindlichen Anzeigeeinrichtung.

In den Zeichnungen ist beispielsweise das erfindungsgemäße Verfahren anhand eines Ausführungsbeispiels näher dargestellt. Es zeigen
- Fig. 1: eine Draufsicht auf eine berührungsempfindliche Anzeigeeinrichtung eines mobilen Endgeräts,
- Fig. 2: eine gegenüber der nach Fig. 1 dargestellten Draufsicht veränderte Darstellung auf der Anzeigeeinrichtung und
- Fig. 3: eine schematische Darstellung zu den am Verfahren beteiligten Mittel.

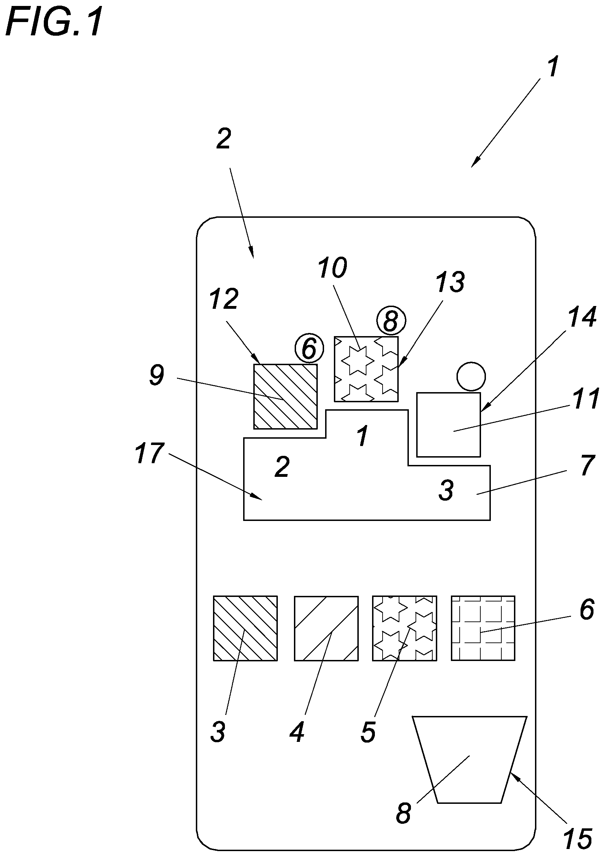

Gemäß dem nach Fig. 1 dargestellten Ausführungsbeispiel wird ein als Smartphone ausgeführtes mobiles Endgerät 1 in einer Draufsicht gezeigt. Dieses Endgerät 1 weist eine berührungsempfindliche Anzeigeeinrichtung 2 (z. B. ein Touchscreen) auf und ist derart ausgebildet, dass es die Detektion einer Berührung der Anzeigeeinrichtung 2 berücksichtigen und verarbeiten kann, wie es von Smartphones bekannt ist. Auf der Anzeigeeinrichtung 2 sind mehrere graphische Elemente 3, 4, 5, 6, 7, 8, 9, 10 und 11 dargestellt, von denen lediglich die Elemente 3, 4, 5 und 6 einem Ziehen und Fallenlassen ("Drag und Drop") über/auf die graphische Benutzeroberfläche der Anzeigeeinrichtung 2 zugänglich sind. Weiter sind auf der Anzeigeeinrichtung 2 mehrere abgegrenzte Anzeigebereiche 12, 13, 14 und 15 dargestellt. Es kann also erkannt werden, dass erfindungsgemäß trotz gemeinsamer Darstellung zahlreicher Elemente eine hohe Übersichtlichkeit am Endgerät gewährleistet wird.

In diesem Ausführungsbeispiel werden die ziehbaren graphischen Elemente 3, 4, 5, 6 entsprechend ihrem Fallenlassen auf den abgegrenzten Anzeigebereichen (12, 13, 14, 15) einer Bewertung unterworfen. Das Fallenlassen, eines ziehbaren graphischen Elements auf einen abgegrenzten Anzeigebereich, also dessen Zuordnung, ist aber natürlich auch für andere Zwecke denkbar.

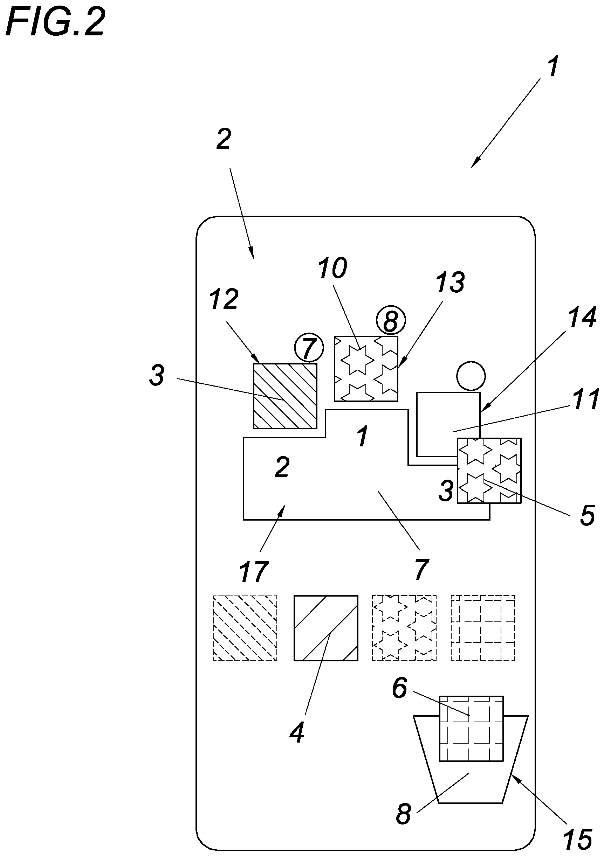

Nach Figur 1 ist ersichtlich, dass in den Anzeigebereichen 12 und 13 bereits graphische Elemente angezeigt werden, die in diesem Fall Bewertungsergebnisse anderer Benutzter wiederspiegeln und vom Anwendungsserver 16 übermittelt wurden. Entsprechend der Berührung der Anzeigeeinrichtung 2 werden nun die graphischen Elemente 3, 4, 5 und 6 über die Anzeigeeinrichtung 2 gezogen und fallgengelassen, wobei bereits zuvor dargestellte Elemente in den Anzeigenbereichen ersetzt werden, wie anhand der Elemente 3, 5, 6 in Figur 2 sowie dessen Vergleich mit Figur 1 zu erkennen ist. So ist durch die Elemente 5 und 6 zu erkennen, dass diese entsprechend der Berührung versetzt auf der Anzeigeeinrichtung 2 aufscheinen. Das Element 3 wurde bereits auf den Anzeigebereich 12 fallengelassen. Es ist auch möglich, bereits auf Anzeigebereiche fallengelassene Elemente von diesen wieder zu lösen und neu zuzuordnen. Die abgegrenzten Anzeigebereiche zeigen zum Zwecke einer hohen Übersichtlichkeit die ziehbaren und auf ihnen fallengelassenen graphischen Elemente 2, 3, 4 oder 5 an - siehe Fig. 2.

Dadurch ergibt sich eine Möglichkeit zur einfach handhabbaren individuellen Bewertung dieser Elemente 3, 5, 6 und in weiterer Folge auch 4. Hierfür muss lediglich jedem abgegrenzten Anzeigebereiche 12, 13, 14, 15 ein unterscheidbarer Bewertungswert zugeordnet werden. Dadurch, dass mindestens zwei dieser graphischen Elemente 3, 4, 5, 6 fallengelassen werden müssen, ergeben sich die genannten Vorteile hinsichtlich geforderter Aufmerksamkeit an den Benutzer, erhöhtem Informationsgehalt zur abgegebenen Bewertung und so weiter. Dabei ist unerheblich, ob diese Elemente 3, 4 parallel oder auch nacheinander gezogen werden, entscheidend ist, dass mehrere der ziehbaren Elemente 3, 4, 5 und 6 auf abgegrenzte Anzeigebereiche 12, 13, 14 oder 15 der Anzeigeeinrichtung 2 fallengelassen werden.

Hat der Benutzter die für eine Übertragung von Daten festzulegenden Handlungen durchgeführt - etwa die Bewertung von mindestens zwei graphischen Elementen -, kann mithilfe eines nicht näher dargestellten Senden-Buttons eine Datenübertragung an mindestens einen Anwendungsserver 16 erfolgen. Es sind aber auch andere Voraussetzungen für eine Übermittlung denkbar, beispielsweise eine automatisiert durchgeführte Übermittlung, sobald alle vier Elemente 3, 4, 5, 6 auf Anzeigebereiche 12, 13, 14, 15 fallengelassen wurden.

Der Anwendungsserver 16 protokolliert mit, auf welche Anzeigebereiche 12, 13, 14, 15 graphische Elemente 3, 4, 5, 6 fallengelassen wurden. Danach erfolgt eine Datenverarbeitung am Anwendungsserver 16, wobei dieser die absolute Anzahl der Bewertungen eines bestimmten graphischen Elements entsprechend dem erfolgten Fallenlassen auf einen bestimmten Anzeigenbereich bestimmt. Des Weiteren kann erfindungsgemäß auch eine weitere Datenverarbeitung erfolgen, indem die relativen Bewertungen, also die Bewertungen der graphischen Elemente zueinander beurteilt werden. So ist anhand der in Figur 1 anhand der rechts oberhalb des Anzeigebereichs 12 dargestellten Ziffer 6 zu erkennen, dass das Element 3 von anderen Benutzern zuvor bereits 6-mal dem Anzeigebereich 12 zugeordnet wurde. Hinsichtlich der relativen Bewertung der Elemente zueinander wurde das Element 5 in Summe besser bewertet als das Element 6. Im Gegensatz zum Stand der Technik können also erheblich verbesserte und genauere Bewertungen und deren Auswertungen erfolgen.

Ein besonders hoher Bedienkomfort mit guter Übersichtlichkeit stellt sich bei vier auf der Anzeigeeinrichtung abgegrenzten Anzeigebereichen 12, 13, 14 und 15 ein, von denen drei Anzeigebereiche 12, 13, 14 auf der Anzeigeeinrichtung 2 zueinander stufenförmig versetzt angeordnet sind. Im Ausführungsbeispiel folgen die Anzeigebereiche 12, 13, 14 einem dreistufigen Podests 17, das als graphisches Element 7 auf der Anzeigeeinrichtung 2 dargestellt ist. Gerade für Bewertungen ist ein derartiges Podest leicht verständlich, selbsterklärend und die Übersichtlichkeit auf der Anzeigeeinrichtung 2 weiter verbessernd, sodass eine Zuordnung eines Elements auf den Anzeigebereich 13 die beste Bewertung vor dem Anzeigenbereichen 12 und11 darstellt. Die Zuordnung auf den als Papierkorb dargestellten Anzeigebereich 15 kann als negative Bewertung aufgefasst und vom Anwendungsserver 16 verarbeitet werden. Somit hat sich eine Darstellung von vier graphischen Elementen 3, 4, 5, und 6 bewährt. Die Verfahrenssicherheit kann auf diese Weise optimiert werden.

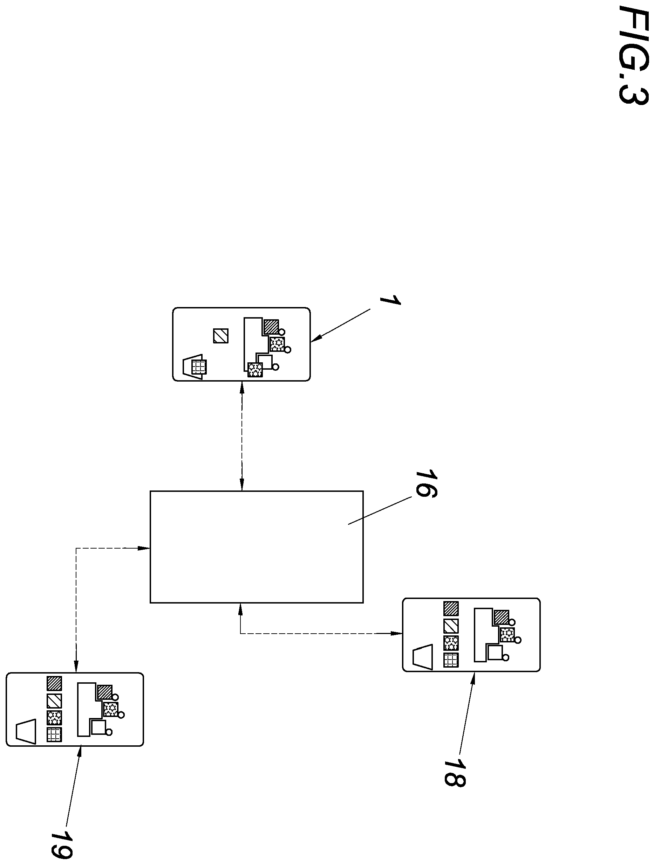

Nach Synchronisation des Endgeräts 2 mit von den Protokollen des Anwendungsserver 16 abhängigen Daten, wird die Darstellung auf der Anzeigeeinrichtung 2 des Endgeräts 1 verändert. Insbesondere werden die gemeinsamen Darstellungen graphischer Elemente 3, 4, 5, 6 in den abgegrenzten Anzeigebereichen 12, 13, 14, 15 synchronisiert und diese graphischen Elemente 3, 4, 5, 6 nur noch ausschließlich in den abgegrenzten Anzeigebereichen 12, 13, 14, 15 dargestellt. Die Anzeigeeinrichtung 2 wird also von nicht in Anzeigenbereiche fallengelassenen graphischen Elementen durch Synchronisation bereinigt, was nicht näher dargestellt, jedoch im Sinne des Ausführungsbeispiels ist. Nach einer Übertragung von Daten an den Anwendungsserver 16 sind dementsprechend die Darstellungen graphischer Elemente 3, 4, 5, 6 in den abgegrenzten Anzeigebereichen durch Synchronisation veränderbar. Das Podest 7 bleibt zur Bewahrung einer Kontinuität der Darstellungen auf dem Verfahren jedoch erhalten, ebenso die Anordnung der abgegrenzten Anzeigenbereiche 12, 13, 14, 15. Nach Synchronisation werden graphische Elemente auch ausschließlich in den abgegrenzten Anzeigebereichen 12, 13, 14, 15 - bzw. werden diese Anzeigebereichen 12, 13, 14, 15 gezielt genutzt, um einem Benutzer durch eine Veränderung der Reihung der in diesen dargestellten graphischen Elemente 3, 4, 5, 6 Informationen zu vermitteln. Übersichtlichkeit auf der Anzeigeeinrichtung 2 und einfach aufzufassender, aber gegenüber dem Stand der Technik erhöhter Informationsfluss an einen Benutzer sind somit gewährleistet. Außerdem wird nach einer Datenübertragung dieser Anwendungsserver 16 mit zwei anderen mobilen Endgerät 18, 19 synchronisiert, wie dies nach Fig. 3 schematisch dargestellt ist. Damit ist auf verfahrenstechnisch einfache und sichere Weise anderen Benutzern unmittelbar eine Änderung von Bewertungen zur Kenntnis zu bringen, indem sich eventuell Darstellungen der graphischen Elemente in den Anzeigebereichen deren Endgeräte ändern.

Bei Synchronisation mit dem Anwendungsserver 16 wird ein haptisches Feedback am Endgerät 1 ausgegeben, um einerseits die Übermittlung der Daten an den Anwendungsserver 16 zu bestätigen, aber auch dem Benutzer die Synchronisation, also einen vollzogenen Datentransfer zu seinem Endgerät zu vermitteln. Im Zuge dessen wird nach oder mit der Synchronisation eines Endgeräts mit dem Anwendungsserver 16 mindestens ein anderes mobiles Endgerät 18, 19 synchronisiert, womit alle Benutzer, die an der Bewertung teilgenommen haben über eventuelle Änderungen von Daten informiert werden - eventuell ebenfalls zusammen mit einem entsprechenden haptischen Feedback.

## Patentansprüche

1. Verfahren zur Steuerung mindestens eines mobilen Endgeräts (1) mit einer berührungsempfindlichen Anzeigeeinrichtung (2), aufweisend:
Darstellung von mindestens zwei graphischen Elementen (3, 4, 5, 6, 7, 8, 9, 10, 11), insbesondere Bildern oder Icons, auf der Anzeigeeinrichtung (2) und von wenigstens zwei auf der Anzeigeeinrichtung (2) abgegrenzten Anzeigebereichen (12, 13, 14, 15),
Detektion mindestens einer Berührung an der berührungsempfindlichen Anzeigeeinrichtung (2),
Ziehen und Fallenlassen von mindestens zwei graphischen Elementen (3, 4, 5, 6) auf den abgegrenzten Anzeigebereichen (12, 13, 14, 15) entsprechend der detektierten Berührung an der Anzeigeeinrichtung (2),
**dadurch gekennzeichnet, dass** das Verfahren zusätzlich umfasst:
Übertragung von Daten an mindestens einen Anwendungsserver (16), wobei der Anwendungsserver (16) daraus wenigstens mitprotokolliert, auf welche der Anzeigebereiche (12, 13, 14, 15) graphische Elemente (3, 4, 5, 6) fallengelassen wurden und Synchronisation zumindest der Darstellungen graphischer Elemente (3, 4, 5, 6) in den abgegrenzten Anzeigebereichen (12, 13, 14, 15) wenigstens eines Endgeräts (1) mit von den Protokollen des Anwendungsservers (16) abhängigen Daten zur Veränderung der Darstellung auf der Anzeigeeinrichtung (2) des Endgeräts (1) nach der Synchronisation.

2. Verfahren nach Anspruch 1, **dadurch gekennzeichnet, dass** wenigstens ein abgegrenzter Anzeigebereich (12, 13, 14, 15) eine Darstellung eines der ziehbaren graphischen Elemente (3, 4, 5, 6) aufweist.

3. Verfahren nach Anspruch 1 oder 2, **dadurch gekennzeichnet, dass** Daten zu allen auf die abgegrenzten Anzeigebereiche (12, 13, 14, 15) der Anzeigevorrichtung (2) fallengelassenen, graphischen Elemente (3, 4, 5, 6) übertragen werden.

4. Verfahren nach einem der Ansprüche 1 bis 3, **dadurch gekennzeichnet, dass** die ziehbaren graphischen Elemente (3, 4, 5, 6) entsprechend ihrem Fallenlassen auf den abgegrenzten Anzeigebereichen (12, 13, 14, 15) einem, insbesondere mehreren, Bewertungsverfahren unterworfen werden.

5. Verfahren nach einem der Ansprüche 1 bis 4, **dadurch gekennzeichnet, dass** nach Synchronisation graphische Elemente (3, 4, 5, 6) ausschließlich in den abgegrenzten Anzeigebereichen (12, 13, 14, 15) dargestellt werden.

6. Verfahren nach einem der Ansprüche 1 bis 5, **dadurch gekennzeichnet, dass** bei Synchronisation mit dem Anwendungsserver (16) ein optisches, akustisches und/oder haptisches Feedback am Endgerät (1) ausgegeben wird.

7. Verfahren nach einem der Ansprüche 1 bis 6, **dadurch gekennzeichnet, dass** mindestens drei, vorzugsweise vier, auf der Anzeigeeinrichtung (2) abgegrenzte Anzeigebereiche (12, 13, 14, 15) dargestellt werden.

8. Verfahren nach einem der Ansprüche 1 bis 7, **dadurch gekennzeichnet, dass** drei abgegrenzte Anzeigebereiche (12, 13, 14, 15) auf der Anzeigeeinrichtung (2) zueinander stufenförmig versetzt angeordnet sind, insbesondere den Stufen eines dreistufigen Podests (17) folgend.

9. Verfahren nach einem der Ansprüche 1 bis 8, **dadurch gekennzeichnet, dass** vier ziehbare graphische Elemente (3, 4, 5, 6) auf der Anzeigeeinrichtung (2) dargestellt werden.

10. Verfahren nach einem der Ansprüche 1 bis 9, **dadurch gekennzeichnet, dass** nach der Synchronisation eines Endgeräts mit dem Anwendungsserver (16) dieser Anwendungsserver (16) mehrere mobile Endgeräte (18, 19) synchronisiert.

11. Mobiltelefon mit einer berührungsempfindlichen Anzeigeeinrichtung (2) zur Ausführung des Verfahrens nach einem der Ansprüche 1 bis 10.

## Claims

1. Method for controlling at least one mobile terminal (1) with a touch-sensitive display device (2), comprising:
representation of at least two graphic elements (3, 4, 5, 6, 7, 8, 9, 10, 11), more particularly images or icons, on the display device (2) and of at least two display regions (12, 13, 14, 15) delimited on the display device (2), detection of at least one touch on the touch-sensitive display device (2),
dragging and dropping at least two graphic elements (3, 4, 5, 6) on the delimited display areas (12, 13, 14, 15) according to the detected contact on the display device (2),
**characterized in that** the method additionally comprises:
transmission of data to at least one application server (16), wherein the application server (16) records therefrom at least on which of the display areas (12, 13, 14, 15) graphic elements (3, 4, 5, 6) have been dropped, and synchronization of at least the representations of graphic elements (3, 13, 14, 15) in the delimited display areas (12, 13, 14, 15) of at least one terminal (1) with data dependent on the protocols of the application server (16) for changing the display on the display device (2) of the terminal (1) after synchronization.

2. Method according to claim 1, **characterized in that** at least one delimited display area (12, 13, 14, 15) has a representation of one of the draggable graphic elements (3, 4, 5, 6).

3. Method according to claim 1 or 2, **characterized in that** data regarding all graphic elements (3, 4, 5, 6) dropped onto the delimited display areas (12, 13, 14, 15) of the display device (2) are transmitted.

4. Method according to one of the claims 1 to 3, **characterized in that** the draggable graphic elements (3, 4, 5, 6) are subjected to one, more particularly several, evaluation methods according to their dropping on the delimited display areas (12, 13, 14, 15).

5. Method according to one of claims 1 to 4, **characterized in that**, after synchronization, graphic elements (3, 4, 5, 6) are displayed exclusively in the delimited display areas (12, 13, 14, 15).

6. Method according to one of the claims 1 to 5, **characterized in that**, during synchronization with the application server (16), an optical, acoustic and/or haptic feedback is outputted at the terminal (1).

7. Method according to one of claims 1 to 6, **characterized in that** at least three, preferably four, delimited display areas (12, 13, 14, 15) are displayed on the display device (2).

8. Method according to one of claims 1 to 7, **characterized in that** three delimited display regions (12, 13, 14, 15) are arranged on the display device (2) offset in steps relative to one another, more particularly following the steps of a three-stage platform (17).

9. Method according to any one of claims 1 to 8, **characterized in that** four drawable graphic elements (3, 4, 5, 6) are displayed on the display device (2).

10. Method according to one of the claims 1 to 9, **characterized in that**, after synchronization of a terminal device with the application server (16), this application server (16) synchronizes a plurality of mobile terminals (18, 19).

11. Mobile telephone with a touch-sensitive display device (2) for carrying out the method according to any of claims 1 to 10.

## Revendications

1. Procédé pour la commande d'au moins un terminal mobile (1) muni d'un dispositif d'affichage tactile (2), comprenant :
la visualisation d'au moins deux éléments graphiques (3, 4, 5, 6, 7, 8, 9, 10, 11), en particulier d'images ou d'icônes, sur le dispositif d'affichage (2) et d'au moins deux zones d'affichage (12, 13, 14, 15) délimitées sur le dispositif d'affichage (2),
la détection d'au moins un toucher sur le dispositif d'affichage tactile (2),
le glisser-déposer d'au moins deux éléments graphiques (3, 4, 5, 6) sur les zones d'affichage délimitées (12, 13, 14, 15) correspondant au toucher détecté sur le dispositif d'affichage (2),
**caractérisé en ce qu'**il comprend en outre :
la transmission de données à au moins un serveur d'application (16), lequel serveur d'application (16) enregistre à partir de celles-ci dans ses protocoles, au minimum, sur laquelle des zones d'affichage (12, 13, 14, 15) les éléments graphiques (3, 4, 5, 6) ont été déposés et
la synchronisation au moins des visualisations d'éléments graphiques (3, 4, 5, 6) dans les zones d'affichage délimitées (12, 13, 14, 15) d'au moins un terminal (1) avec les données dépendantes des protocoles du serveur d'application (16) pour modifier la visualisation sur le dispositif d'affichage (2) du terminal (1) après la synchronisation.

2. Procédé selon la revendication 1, **caractérisé en ce qu'**au moins une zone d'affichage délimitée (12, 13, 14, 15) présente une visualisation d'un élément graphique (3, 4, 5, 6) déplaçable.

3. Procédé selon la revendication 1 ou 2, **caractérisé en ce que** des données concernant tous les éléments graphiques (3, 4, 5, 6) déposés dans les zones d'affichage délimitées (12, 13, 14, 15) du dispositif d'affichage (2) sont transmises.

4. Procédé selon l'une des revendications 1 à 3, **caractérisé en ce que** les éléments graphiques (3, 4, 5, 6) déplaçables sont soumis à un, de préférence plusieurs procédés d'évaluation, selon comment ils sont déposés sur les zones d'affichage délimitées (12, 13, 14, 15).

5. Procédé selon l'une des revendications 1 à 4, **caractérisé en ce qu'**après la synchronisation, des éléments graphiques (3, 4, 5, 6) sont visualisés uniquement dans les zones d'affichage délimitées (12, 13, 14, 15).

6. Procédé selon l'une des revendications 1 à 5, **caractérisé en ce que** lors de la synchronisation avec le serveur d'application (16), le terminal (1) émet une confirmation visuelle, sonore et/ou tactile.

7. Procédé selon l'une des revendications 1 à 6, **caractérisé en ce qu'**au moins trois, de préférence quatre zones d'affichage (12, 13, 14, 15) délimitées sur le dispositif d'affichage (2) sont visualisées.

8. Procédé selon l'une des revendications 1 à 7, **caractérisé en ce que** trois zones d'affichage (12, 13, 14, 15) délimitées sur le dispositif d'affichage (2) sont décalées les unes par rapport aux autres en gradins, en particulier suivant les marches d'un podium à trois marches (17).

9. Procédé selon l'une des revendications 1 à 8, **caractérisé en ce que** quatre éléments graphiques (3, 4, 5, 6) déplaçables sont visualisés sur le dispositif d'affichage (2).

10. Procédé selon l'une des revendications 1 à 9, **caractérisé en ce qu'**après la synchronisation d'un terminal avec le serveur d'application (16), ce serveur d'application (16) synchronise plusieurs terminaux mobiles (18, 19).

11. Téléphone mobile avec un dispositif d'affichage tactile (2) pour l'exécution du procédé selon l'une des revendications 1 à 10.
